# FASCICULE DE BREVET EUROPEEN

(11) **EP 2 236 899 B1**
(45) Date de publication et mention de la délivrance du brevet: **24.06.2015**
(21) Numéro de dépôt: 10305239.5
(22) Date de dépôt: 10.03.2010
(51) Int. Cl.: F16L 59/12, F16L 5/10, E04F 17/02

(54) **Equipement pour combler le pourtour d'un orifice ménagé dans une paroi pour permettre le passage d'un conduit**
Vorrichtung zum Schließen des umlaufenden äußeren Rands einer Wandöffnung zur Durchführung einer Leitung
Device for filling in the perimeter of an opening made in a wall to allow the entry of a conduit

(30) Priorité: 10.03.2009 FR 0901083; 17.07.2009 FR 0954982
(43) Date de publication de la demande: 06.10.2010
(73) Titulaire: Poujoulat, 79360 Granzay Gript (FR)
(72) Inventeur: Pierre, Jean Luc, 79460, Magne (FR); Thomas, Stéphane, 79460, Magne (FR); Coirier, Frédéric, 92380, Garches (FR); Druette, Lionel, 79180, Chauray (FR); Cant, Francis, 79000, Niort (FR)
(74) Mandataire: Michelet, Alain

(56) Documents cités:
- WO-A1-98/39591
- WO-A1-2007/049980
- DE-U1-202007 010 641
- GB-A- 2 216 220
- US-A1- 2007 261 884

## Description

La présente invention concerne le domaine général de la fumisterie. Elle concerne plus particulièrement un équipement pour combler le pourtour d'un orifice ménagé dans une paroi pour permettre le passage d'un conduit, notamment un conduit d'évacuation de fumées passant au travers d'une paroi (plancher, plafond, mur intérieur ou extérieur, traversée de toiture ...) séparant une zone chaude et une zone froide.

Dans un bâtiment de type maison d'habitation ou autre, les traversées de parois d'un conduit, en particulier entre une zone chaude (partie habitable) et une zone froide (combles par exemple) ne sont pas faciles à gérer de manière simple et efficace.

Le document WO-98/39591 décrit un équipement pour combler le pourtour d'un orifice ménagé dans une paroi pour permettre le passage d'un conduit, cet équipement, conforme au préambule de la revendication 1, comprenant un joint plat solidarisé avec des plaques support par une colle ou une matière adhésive.

La présente invention propose un équipement technique particulièrement intéressant permettant d'assurer une étanchéité à l'air optimale, au niveau de l'orifice de passage du conduit ménagé dans la paroi.

Un tel équipement de comblement étanche s'avère particulièrement simple et efficace. Les caractéristiques structurelles des composants (matériaux, dimensions ...) sont adaptées en fonction des normes éventuelles à respecter.

Cet équipement est du type comprenant une embase plane comportant une face avant et une face arrière, laquelle embase comporte un pourtour délimité par une bordure externe et est munie d'un orifice interne qui est délimité par une bordure interne associée à un joint d'étanchéité, laquelle embase est adaptée pour venir se positionner autour du conduit, avec l'une de ses faces avant ou arrière en regard d'une face d'appui de la paroi, ledit joint d'orifice venant prendre appui contre la paroi extérieure dudit conduit et la bordure externe de ladite embase étant adaptée pour s'étendre au-delà de l'encombrement dudit orifice de paroi, un moyen d'étanchement étant en outre prévu entre ladite embase et ladite face d'appui de ladite paroi ;
ladite embase comporte une plaque rigide d'un seul tenant dans laquelle est ménagé ledit orifice interne ;
et ledit joint d'orifice de la plaque rigide d'un seul tenant est en forme de plaque plane de matière élastique (avantageusement une plaque de silicone) munie d'un orifice de dimensions inférieures à celles de l'orifice interne ménagé dans ladite plaque rigide, laquelle plaque élastique formant joint est fixée sur l'une des faces de ladite plaque rigide, avec son orifice centré ou approximativement centré sur celui de ladite plaque rigide ;
et conformément à l'invention, les moyens de fixation de la plaque élastique sur l'une des faces de la plaque rigide consistent en une structure rapportée dont une partie est fixée sur ladite plaque rigide et dont une autre partie vient plaquer une zone de ladite plaque élastique contre l'une des faces de ladite plaque rigide, pour assurer sa fixation par pincement.

Ladite structure rapportée consiste de préférence en une plaque de matière munie d'un orifice central, la bordure périphérique externe de ladite plaque rapportée, disposée en débordement de ladite plaque élastique étant fixée directement sur ladite plaque rigide et sa partie bordant ledit orifice interne servant de zone de pincement pour ladite plaque élastique.

La plaque élastique comporte avantageusement un bourrelet sur sa bordure périphérique extérieure et la plaque rapportée de fixation comporte un logement pour l'accueil de ce bourrelet et le blocage de ladite plaque élastique.

La plaque rigide et la structure rapportée pour le pincement de ladite plaque élastique formant joint, sont de préférence réalisées en matériaux métalliques soudables et elles sont solidarisées entre elles par soudure (points de soudure ou ligne continue de soudure).

Le moyen d'étanchement entre l'embase et la paroi est avantageusement constitué d'un joint fixé contre la face arrière de ladite embase. Il peut s'agir d'un joint en forme de bourrelet tubulaire, ou un joint mousse, muni d'une face autocollante, fixé à proximité du pourtour de la bordure externe de l'embase.

Selon une autre particularité, la plaque d'embase est réalisée en matériau métallique (par exemple en acier galvanisé) et elle est munie d'un pli de rigidification à l'équerre, au niveau de sa bordure externe, qui s'étend de l'autre côté de sa face d'appui.

Selon encore une autre particularité, la face arrière de l'embase est avantageusement équipée de moyens servant de repère pour son centrage sur l'orifice ménagé dans la paroi.

D'autre part, l'embase de l'équipement conforme à l'invention comporte avantageusement des orifices pour sa fixation par vis contre la face d'appui de la paroi d'accueil.

L'embase de comblement et d'étanchéité peut être associée à une coquille isolante, adaptée pour venir entourer le conduit, d'une part venant en appui contre sa face avant, et d'autre part venant en appui contre la paroi extérieure dudit conduit.
Cette coquille isolante est avantageusement constituée d'une couche tubulaire de matériau isolant conformée pour entourer le conduit, laquelle couche tubulaire est ceinturée par une jaquette de maintien.
La couche en matériau isolant de cette coquille est de préférence formée de deux demi-coques, chacune demi-cylindrique, associées à une jaquette de maintien constituée d'une feuille métallique flexible conformée en cylindre ouvert, munie de deux bordures libres qui sont équipées de moyens de fermeture amovibles.
Là encore, cette structure particulière facilite le positionnement de la coquille isolante sur le conduit, une fois ce dernier positionné au travers de l'orifice de paroi.

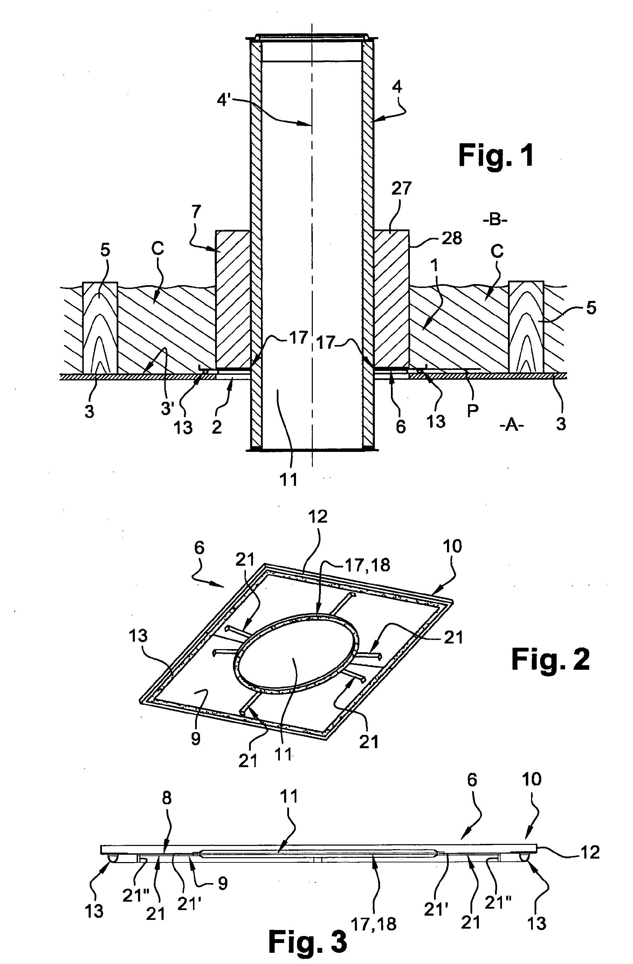

L'invention sera encore illustrée, sans être aucunement limitée, par la description suivante en relation avec les dessins annexés. Les figures 1 à 7 ne font pas partie de l'invention, mais représentent des éléments de l'état de la technique qui sont utiles à la compréhension de l'invention.

Dans les dessins annexés :
- la figure 1 est une vue en coupe d'un équipement mis en place sur le conduit de réception, au niveau de l'orifice de traversée de paroi ;
- la figure 2 est une vue en perspective par-dessous d'une structure possible d"embase de comblement et d'étanchéité, pour l'équipement illustré sur la figure 1, représentée isolément ;
- la figure 3 est une vue en coupe de l'embase de comblement et d'étanchéité de la figure 2 ;
- la figure 4 montre l'embase de comblement et d'étanchéité des figures 2 et 3, vue par-dessus, avec ses deux parties constitutives désassemblées ;
- la figure 5 est une coupe transversale du joint équipant la face arrière de l'embase des figures 2 à 4 ;
- la figure 6 est une coupe transversale du joint équipant la bordure d'orifice de l'embase des figures 2 à 4 ;
- la figure 7 est une vue en perspective d'une coquille isolante, seule, apte à être associée à l'embase des figures 1 à 6, illustrée ici avec sa jaquette de maintien non complètement fermée ;
- la figure 8 est une vue par-dessus, côté face arrière, d'une forme de réalisation possible de l'embase de comblement et d'étanchéité selon l'invention ;
- la figure 9 est une vue en coupe selon le plan de coupe 9-9 de la figure 8 ;
- la figure 10 est une vue en perspective éclatée de l'embase des figures 8 et 9, montrant ses différents éléments constitutifs ;
- la figure 11 montre l'embase des figures 8 à 10 en position autour d'un conduit de réception ;
- la figure 12 est une vue en coupe transversale d'une variante de réalisation possible de l'embase de comblement et d'étanchéité selon l'invention ;
- la figure 13 est une vue agrandie d'un détail de la figure 12.

Comme on peut le voir sur la figure 1, l'équipement 1 est adapté pour combler et étancher le pourtour d'un orifice circulaire 2 ménagé dans une paroi 3 (ici un plafond), au travers duquel passe un conduit 4. Le conduit 4 est un conduit tubulaire à section circulaire qui est centré ou approximativement centré dans l'orifice de passage 2 ; son axe 4' s'étend perpendiculairement ou approximativement perpendiculairement à la paroi 3.
Le conduit 4 peut être un conduit d'évacuation de fumées provenant d'un appareil de chauffage.

La paroi 3 est ici horizontale et sépare deux volumes, l'un inférieur A (par exemple une zone chaude telle qu'une pièce d'habitation) et l'autre supérieur B (par exemple les combles sous toiture de l'habitation). Elle peut être réalisée en plaques de plâtre fixées sur des poutrelles en bois 5.

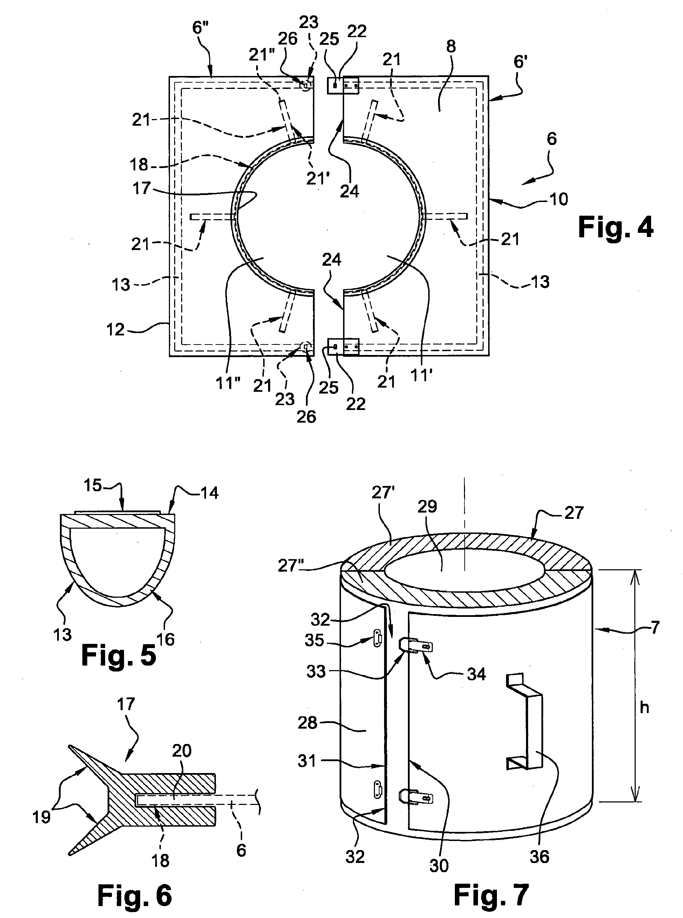

L'équipement 1 comprend une embase de comblement 6, détaillée sur les figures 2 à 6, qui est posée sur la face d'appui 3' de la paroi 3 (face de dessus) en réalisant l'étanchéité, d'une part avec ladite paroi 3, et d'autre part avec le conduit 4. Une coquille isolante 7, détaillée sur la figure 7, est avantageusement posée sur ladite embase de comblement 6, adaptée pour venir ceinturer ledit conduit 4 sur une partie de sa hauteur, afin d'optimiser l'isolation au niveau de l'orifice 2, autour dudit conduit 4.

Comme on peut le voir sur les figures 2 à 4, l'embase de comblement 6 présente ici une forme générale carrée (ayant par exemple 50 à 60 cm de côté), avec une face avant 8 et une face arrière 9 ; elle est délimitée par une bordure extérieure 10 et comporte un orifice interne 11 de forme générale circulaire.

Tel qu'illustré sur la figure 4, cette embase 6 est en fait constituée de deux demi-plaques 6' et 6" munies chacune d'une réservation 11', 11" de forme demi-circulaire ; des moyens d'assemblage, détaillés ci-dessous, sont prévus pour solidariser entre elles les deux demi-plaques 6' et 6" et reconstituer ainsi l'embase 6 des figures 1, 2 et 3, avec l'orifice central circulaire 11 (formé de l'association des deux réservations complémentaires 11' et 11").

L'embase 6 est par exemple réalisée en feuille d'acier galvanisé de 1 mm d'épaisseur ; elle est avantageusement munie d'un pli de rigidification périphérique 12 (ayant par exemple 10 mm de hauteur) qui s'étend à l'équerre sur tout le long de sa bordure périphérique 10, orienté du côté de sa face avant 8.

Un joint d'étanchéité 13 est fixé sur tout le pourtour de la face arrière 9 de l'embase 6, à quelques millimètres (par exemple 10 mm) de la bordure périphérique 10. Ce joint 13, détaillé sur la figure 5 (vu en section) est en forme de bourrelet tubulaire muni d'une face plane 14 équipée d'un adhésif 15 pour sa fixation contre ladite face arrière 9, et dont l'extrémité opposée 16 est à section demi-circulaire. Ce joint périphérique 13, réalisé par exemple en caoutchouc cellulaire, peut avoir une hauteur comprise entre 5 et 12 mm et une largeur de l'ordre de 10 à 15 mm.

Un second joint d'étanchéité 17 est prévu sur la bordure interne 18 délimitant l'orifice 11. Ce joint 17, détaillé sur la figure 6 (vu en section) comprend, d'un côté, deux lèvres d'étanchéité superposées 19, et de l'autre côté, une rainure 20 pour son encastrement sur la bordure 18 de l'embase 6 délimitant l'orifice 11 ; il peut être réalisé en silicone.

Les joints 13 et 17 sont réalisés en deux parties équipant chacune l'une des demi-plaques 6', 6".

Du côté de sa face arrière 9, l'embase 6 comporte encore des organes 21 servant de repères pour son centrage sur l'orifice de paroi 2. Ces organes de centrage 21, ici au nombre de six, consistent en des languettes rectilignes s'étendant de manière rayonnée, ou sensiblement rayonnée, depuis la bordure d'orifice 18 en direction de la bordure périphérique 10. Ces languettes 21 sont réalisées en métal (acier galvanisé par exemple) ; elles ont une section longitudinale en L dont l'une des ailes 21' est solidarisée par soudage contre la face arrière 9 de l'embase 6, et dont l'autre aile 21 ", située au niveau de l'extrémité « extérieure » de l'aile 21', s'étend sur chant, dans un plan perpendiculaire à celui de l'embase 6, sur une hauteur de l'ordre de 10 à 15 mm par exemple. L'aile d'extrémité 21" de chaque languette 21 est placée sur un cercle qui est centré sur le centre de l'orifice 11 et dont le diamètre est prévu légèrement inférieur au diamètre de l'orifice de paroi 2.

Les moyens d'assemblage des deux demi-coquilles 6' et 6" sont détaillés sur la figure 4. Ils consistent en deux pattes 22 fixées par exemple par soudage sur l'une des demi-plaques 6' et aptes à être chacune solidarisée avec l'autre demi-plaque 6" par l'intermédiaire d'un clip de maintien 23.
Les pattes 22 sont pour cela fixées au niveau de la bordure d'assemblage 24 de la demi-plaque 6' et elles comportent une partie en saillie, orientée vers l'autre demi-plaque 6" qui est munie d'un premier orifice d'assemblage 25. De son côté, l'autre demi-plaque 6" comporte un second orifice d'assemblage 26 adapté pour venir en superposition avec ledit premier orifice 25 de patte 22, afin d'être traversé par une goupille d'assemblage constitutive dudit clip de maintien 23.
Ce clip de maintien 23, réalisé en matière plastique, peut être du type à goupille constituée de pattes flexibles parallèles munies d'ergots d'encliquetage au niveau de leur extrémité libre.

Les dimensions de l'embase 6 sont adaptées :
- pour que sa bordure périphérique, avec le joint 13, vienne reposer sur la face en regard (face supérieure 3') de la paroi 3, autour de l'orifice de paroi 2, et
- pour qu'une fois l'orifice 11 reconstitué (par l'assemblage des deux demi-plaques 6' et 6"), son diamètre soit très légèrement inférieur au diamètre du conduit 4 (de sorte que le joint 17 vienne prendre convenablement appui contre la face extérieure dudit conduit 4, tout en étant comprimé, afin de réaliser l'étanchéité recherchée).

Dans une variante de réalisation, l'embase de comblement 6 est de forme générale circulaire.

La coquille isolante 7, représentée isolément sur la figure 7, est formée d'une couche tubulaire cylindrique 27 en matériau isolant, ceinturée par une jaquette de maintien 28.

La couche cylindrique de matériau isolant 27 est constituée de l'assemblage de deux demi-coques 27' et 27", toutes deux de forme demi-cylindrique. Leur juxtaposition permet la constitution du cylindre isolant 27, délimitant un orifice interne 29 destiné à recevoir le conduit 4 (le diamètre au repos de l'orifice 29 est légèrement inférieur au diamètre externe du conduit 4, de manière à obtenir une légère compression du matériau isolant lors de la pose de la coquille 7).
Le matériau isolant utilisé peut être de la laine de roche ayant une densité de 90 kg/m³ ; l'épaisseur de la paroi du cylindre 27 est avantageusement comprise entre 8 et 15 cm, de préférence supérieure ou égale à 8 cm ; son diamètre externe peut être de l'ordre de 40 à 45 cm.

La jaquette de maintien 28 consiste en une feuille d'acier galvanisé conformée en cylindre ouvert, dont les deux bordures libres en vis-à-vis 30 et 31 sont équipées de moyens de fermeture amovibles, ici en forme d'organes de crochetage 32 de type « sauterelle ».
Chaque organe de crochetage 32 est formé d'un anneau 33 associé à un levier 34, fixé sur l'une des bordures 30 de la jaquette 28, adapté pour coopérer avec un crochet 35 fixé sur l'autre bordure 31.
Une fois les moyens de fermeture 32 activés, la jaquette 28 positionnée autour du cylindre 27 comprime légèrement le matériau isolant 27 (pour permettre son serrage sur le conduit 4).

Sur la figure 7, on remarque que la face externe de la jaquette 28 comporte une poignée 36 pour faciliter sa manipulation. Cette poignée 36 peut être réalisée par pliage d'une platine en inox, dont les extrémités sont soudées sur la jaquette 28.
On remarque également que la jaquette 28 a une hauteur un peu inférieure à la hauteur du cylindre isolant 27, de manière à permettre audit cylindre 27 de déborder légèrement de part et d'autre.
La hauteur h du cylindre isolant 27 peut, par exemple, être comprise entre 25 et 50 cm, la hauteur de la jaquette 28 lui étant inférieure de 2 à 3 cm.

L'aspect multi-pièces complémentaires de l'embase 6 (deux demi-plaques 6' et 6") et de la coquille isolante 7 (deux demi-coques 27', 27" associées à la jaquette de maintien 28) autorise la pose de l'équipement d'étanchéité et d'isolation 1 après que le conduit 4 ait été installé au travers de l'orifice de paroi 2.

Après réalisation de l'orifice 2 dans la paroi 3, le conduit 4 est mis en place, maintenu par tous moyens de fixation appropriés (non représentés), par exemple un système classique de collier(s) associé(s) à des flasques et cornières de maintien fixés aux entrais de fermette dans le volume B.

Les deux demi-plaques 6' et 6", séparées l'une de l'autre, peuvent alors être mises en place autour du conduit 4 pour constituer l'embase de comblement 6, avec sa face arrière 9 en appui contre la face de dessus 3' de la paroi 3, et avec sa face avant 8 orientée vers le haut. La bordure périphérique 10 de l'embase 6 reconstituée s'étend au-delà de l'encombrement de l'orifice 2 ; le joint d'étanchéité périphérique 13 vient alors s'appuyer contre la face de dessus 3' de la paroi 3, sur le pourtour de l'orifice 2, et le joint d'orifice 17 vient s'appuyer contre la paroi externe du conduit 4. L'embase 6 s'étend dans un plan P qui est perpendiculaire à l'axe 4' du conduit 4 ; les languettes de repérage 21 permettent de situer le conduit 4 au-delà de la distance de sécurité, choisie ou imposée, des matériaux combustibles environnants.
Les deux demi-plaques 6' et 6" sont assemblées entre elles par les moyens d'assemblage 22, 23 (activation des clips de maintien 23 après superposition des couples d'orifices 25-26).

A ce moment, l'étanchéité peut être complétée au moyen de bandes adhésives positionnées sur la ligne d'assemblage 24 des deux demi-plaques 6' et 6", ainsi que sur le pourtour 10 de l'embase 6 reconstituée. Le cas échéant, de telles bandes adhésives peuvent suffire pour obtenir l'étanchéité recherchée entre l'embase 6 et la paroi 3, et le joint périphérique 13 équipant la face arrière 9 peut être supprimé.

On pose ensuite la coquille isolante 7 en installant les deux demi-coques 27' et 27" autour du conduit 4, avec leur face inférieure en appui sur la face avant 8 de l'embase de comblement 6, puis en installant la jaquette de maintien 28 autour du cylindre isolant 27 reconstitué.
Cette mise en place de la jaquette 28 est possible du fait de la flexibilité de la feuille de métal constitutive (les bordures 29 et 30 en regard peuvent être écartées l'une de l'autre d'une distance supérieure au diamètre du cylindre isolant 27).
La jaquette 28 est approximativement centrée sur la hauteur du cylindre isolant 27 et elle est fermée au moyen des organes de crochetage 31, pour assurer une légère compression de ce cylindre isolant 27 contre le conduit 4.
Le diamètre de la coquille isolante 7 est prévu inférieur à la longueur du côté de l'embase de comblement 6, de manière à ce que la face de dessus 8 de cette dernière réceptionne complètement ladite coquille 7.
On peut ensuite mettre en place une isolation C sur la paroi 3, côté zone froide B.
Cette isolation C, par exemple une couche de laine de roche ou de laine de verre, est posée entre les poutrelles de bois 5 ; elle vient en appui contre la coquille isolante 7 et elle vient recouvrir la bordure périphérique de l'embase de comblement 6 (qui déborde de l'encombrement de la coquille 7).
La hauteur h de la coquille 7 est adaptée pour être supérieure à l'épaisseur de la couche d'isolation C envisagée.

On obtient ainsi un équipement de comblement étanche et isolant, très facile à installer et éventuellement aussi à déposer.

La paroi externe de la coquille isolante 7 définit une limite physique qui empêche les matériaux environnants de venir à proximité du conduit 4 (dans la zone ceinturée), participant ainsi, le cas échéant, au respect d'éventuelles normes imposées.

On notera en outre que le serrage de la coquille isolante 7 sur le conduit 4 permet de faire supporter audit conduit le poids de ladite coquille 7, et ainsi de ne pas surcharger le plafond 3.

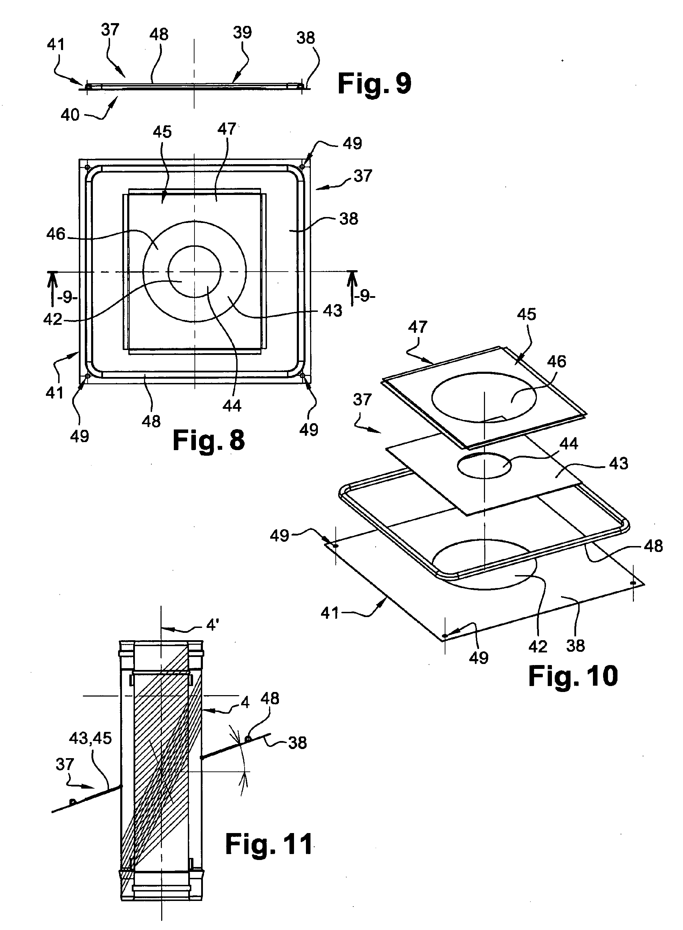

Les figures 8 à 11 illustrent une forme de réalisation possible de l'embase de comblement et d'étanchéité conforme à l'invention.

Ici, l'embase 37 comprend une plaque rigide 38, d'un seul tenant, ayant une face avant 39 et une face arrière 40, délimitée par un pourtour périphérique 41, de forme générale carrée. Cette plaque 38 est réalisée par exemple en acier galvanisé de 0,8 mm d'épaisseur, et elle comporte un orifice central 42, ici circulaire, dont la bordure est équipée d'un joint 43 en forme de plaque plane de matière élastique, muni d'un orifice central 44.
La plaque de matière élastique formant joint 43 est avantageusement réalisée en silicone ; son épaisseur peut être de l'ordre de 1,5 mm.

Cette plaque de matière élastique 43 est fixée sur l'une des faces de la plaque rigide 38, avec son orifice 44 centré ou sensiblement centré sur l'orifice de plaque 42. Cette fixation peut être obtenue par tout moyen approprié ; cependant, elle est de préférence réalisée par pincement, au moyen d'une plaque rapportée 45 munie d'un orifice central 46.

La plaque de fixation 45 peut être obtenue en acier galvanisé de 0,8 mm d'épaisseur ; elle présente ici une forme générale rectangulaire et sa bordure périphérique extérieure comporte un pli de rigidification à l'équerre 47.
Cette plaque de fixation 45 a des dimensions supérieures à celles de la plaque de matière élastique 43 mais inférieures à celles de la plaque rigide 38 ; son orifice central 46 a une forme et une dimension qui sont identiques ou proches de celles de l'orifice 42 de ladite plaque rigide 38.
La fixation de la plaque de matière élastique formant joint 43 est obtenue :
- par sa prise en sandwich et pincement entre la plaque rigide 38 et la plaque de fixation 45, les différents orifices 42, 44 et 46 étant disposés coaxialement ou sensiblement coaxialement, et
- par solidarisation, par exemple au moyen de points de soudure, entre la zone de la plaque de fixation 45 qui déborde de la plaque de matière élastique 43, et la partie en regard de la plaque rigide 38.

Le pli à l'équerre 47 de la plaque de fixation 45 est orienté à l'opposé de la plaque rigide 38, côté face avant 39 de cette dernière.

La solidarisation entre la plaque 38 et la plaque de fixation 45 est réalisée en dehors de l'encombrement de la plaque de joint 43 pour assurer une fixation de cette dernière par un simple phénomène de pincement ; une telle fixation par pincement s'avère à la fois efficace et elle respecte l'intégrité de la plaque de matière élastique 43, ce qui présente un intérêt particulier pour un matériau tel que le silicone, relativement fragile au percement et difficilement collable.

La face d'appui de la plaque 38, destinée à venir en regard de la paroi que l'on souhaite équiper, reçoit un joint périphérique 48, par exemple un joint plat en mousse (ici, c'est la face avant 39 de la plaque 38, constituant aussi la face avant de l'embase 37, qui reçoit le joint périphérique 48).

D'autre part, sur les figures 8 et 10, on remarque la présence d'orifices 49 ménagés au niveau des angles de la plaque rigide 38, adaptés pour permettre la fixation de l'embase 37 sur la paroi que l'on souhaite équiper, par exemple au moyen de vis de fixation.

L'orifice circulaire 44 de la plaque de joint 43 est sous-dimensionné par rapport au diamètre externe du conduit que l'on veut équiper. D'autre part, les orifices 42 et 46, respectivement de la plaque rigide 38 et de la plaque de fixation 41, sont surdimensionnés par rapport à ce diamètre de conduit.

Le positionnement de l'embase 37 pour combler l'orifice 2 de la paroi 3 peut être réalisé avant ou après la pose du conduit.
Dans tous les cas, on introduit l'une des extrémités du conduit 4 dans l'orifice 42, 46 de l'embase 37 et la partie de joint plat 43 qui borde l'orifice 44 vient automatiquement se déformer pour épouser la face externe de ce conduit 4, par ses caractéristiques d'élasticité.
Une telle structure de comblement s'avère très simple à fabriquer et à poser. Elle peut être placée d'un côté ou de l'autre de la paroi que l'on souhaite équiper, simplement posée sur cette paroi, ou fixée au moyen de vis par l'intermédiaire des orifices 49.

On notera que le surdimensionnement des orifices 42 et 46 de l'embase 37 par rapport au diamètre externe du conduit 4 équipé, autorise une pose de l'embase de comblement 37 en pente par rapport au plan perpendiculaire à l'axe 4' du conduit 4, cela grâce à la capacité de déformation du joint plat 43.
La figure 11 illustre un tel positionnement en pente.
Cette structure de comblement présente donc une grande polyvalence de pose.

Les orifices 42 et 46 peuvent avoir une forme autre que circulaire (par exemple carrée, rectangulaire, oblongue ou en ellipse).
Egalement, la plaque rigide 38 et la plaque de fixation 45 peuvent avoir une forme générale autre que carrée ou rectangulaire (par exemple circulaire).

Si on souhaite isoler efficacement le pourtour de l'orifice au travers duquel passe le conduit 4, après la pose de l'embase 37, une coquille isolante 7 peut être mise en place de la même manière que celle expliquée ci-dessus. Cette coquille 7 vient reposer sur la face avant 39 de l'embase 37, éventuellement au travers de l'orifice de paroi si l'embase 37 est fixée sur cette paroi avec sa face avant 39 orientée vers ledit orifice de paroi.

En cas de positionnement en pente de l'embase 37, la base de la coquille isolante 7 est découpée selon un secteur angulaire adapté.

Ce type d'équipement 1 de comblement et d'isolation peut être envisagé pour combler tout orifice traversé par un conduit, que cet orifice soit ménagé dans un mur intérieur ou extérieur, horizontal ou vertical, voire même en pente (traversée de toiture par exemple).

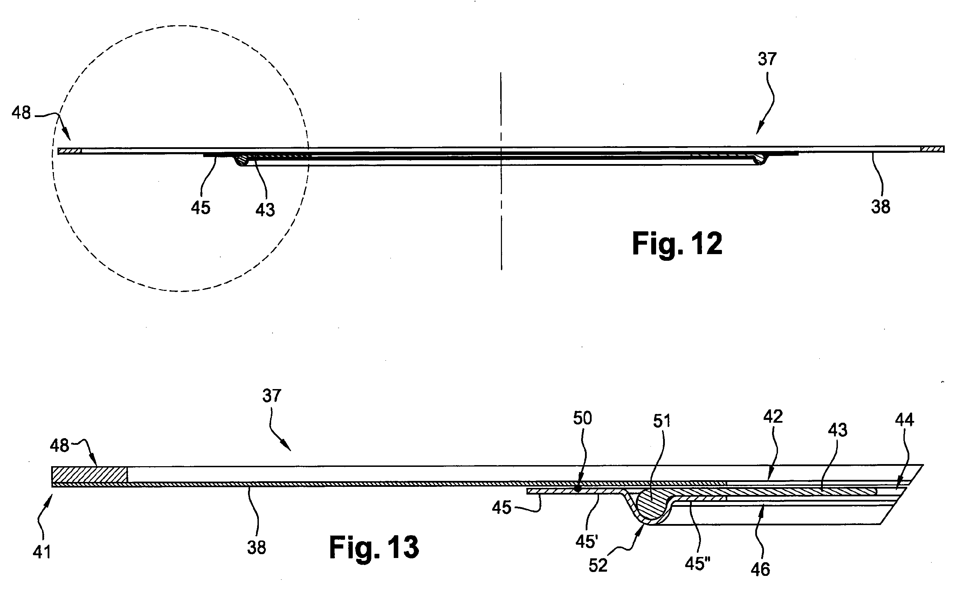

Les figures 12 et 13 illustrent une variante de l'embase de comblement des figures 8 à 11. Dans la description qui suit, pour faciliter la compréhension, les parties structurelles identiques conservent les mêmes repères.
On retrouve donc ici une embase 37 comprenant :
- une plaque rigide 38 avec un orifice central 42
- un joint plat 43, avantageusement en silicone, avec un orifice central 44, et
- une plaque rapportée 45, pour la fixation du joint plat 43 par pincement contre la plaque rigide 38, cette plaque rapportée 45, munie d'un orifice central 46, étant solidarisée avec ladite plaque rigide 38 par points de soudure 50.

Dans cette variante de réalisation, la bordure périphérique extérieure du joint plat 43 comporte un bourrelet ou tore périphérique 51, et la plaque rapportée de fixation 45 comporte un logement 52 conformé pour accueillir ledit bourrelet 51 en vue d'assurer un blocage ou maintien mécanique dudit joint 43, en complément de l'effet de pincement précité.

La solidarisation de la plaque rapportée 45 avec la plaque rigide 38 est réalisée sur une zone 45' de ladite plaque 45 située extérieurement par rapport au logement 52 ; et le pincement mécanique est obtenu par une zone 45" de la plaque 45 située intérieurement par rapport au logement 52 (sur le pourtour de l'orifice 46).

La section du bourrelet 51 peut être circulaire ou approximativement circulaire ; et la section du logement 52 est complémentaire de celle dudit bourrelet 51. Ce bourrelet 51 est avantageusement continu sur toute la périphérie extérieure du joint plat 43 ; sa forme générale peut être circulaire, carrée ou autre et son épaisseur peut être de l'ordre de 5 mm.
La forme générale du logement 52 est adaptée à celle du bourrelet 51.

On notera que la partie intérieure 45" de la plaque 45 s'étend dans un plan qui est légèrement décalé par rapport au plan de la partie extérieure 45', pour tenir compte de l'épaisseur du joint plat 43.

Le bourrelet 51 est avantageusement réalisé monobloc avec le reste du joint plat 43 ; il peut aussi être obtenu au moyen d'une pièce rapportée, solidarisée par tout moyen approprié.

Ici encore, cette variante d'embase 37 peut ou non être associée à une coquille isolante 7 telle que décrite ci-dessus.

## Revendications

1. Equipement pour combler le pourtour d'un orifice (2) ménagé dans une paroi (3) pour permettre le passage d'un conduit (4) d'évacuation de fumées, lequel équipement comprend une embase plane (37) comportant une face avant (39) et une face arrière (40), laquelle embase (37) comporte un pourtour délimité par une bordure externe (41) et est munie d'un orifice interne (42, 46) qui est délimité par une bordure interne associée à un joint d'étanchéité (43), laquelle embase (37) est adaptée pour venir se positionner autour dudit conduit (4), avec l'une de ses faces avant ou arrière (39, 40) en regard de l'une des faces d'appui (3') de ladite paroi (3), ledit joint d'étanchéité (43) venant prendre appui contre la paroi extérieure dudit conduit (4), et la bordure externe (41) de ladite embase (37) étant adaptée pour s'étendre au-delà de l'encombrement dudit orifice de paroi (2), un moyen d'étanchement (48) étant en outre prévu entre ladite embase (37) et ladite face d'appui (3') de ladite paroi (3), ladite embase (37) comportant une plaque rigide d'un seul tenant (38) dans laquelle est ménagé ledit orifice interne (42), et ledit joint d'étanchéité de la plaque (38) étant en forme de plaque plane (43) de matière élastique munie d'un orifice (44) de dimensions inférieures à celles de l'orifice interne (42) ménagé dans ladite plaque (38), laquelle plaque élastique (43) formant joint est fixée sur l'une des faces de ladite plaque (38), avec son orifice (44) centré ou approximativement centré sur celui (42) de ladite plaque (38), **caractérisé en ce que** les moyens de fixation de la plaque élastique (43) sur l'une des faces de la plaque (38) consistent en une structure rapportée (45) dont une partie est fixée sur ladite plaque (38) et dont une autre partie vient plaquer une zone de ladite plaque élastique (43) contre l'une des faces de ladite plaque (38), pour assurer sa fixation par pincement.

2. Equipement selon la revendication 1, **caractérisé en ce que** ladite structure rapportée (45) consiste en une plaque de matière munie d'un orifice central (46), la bordure périphérique externe de ladite plaque rapportée (45), disposée en débordement de la plaque élastique (43) étant fixée directement sur ladite plaque (38) et sa partie bordant ledit orifice central (46) servant de zone de pincement pour ladite plaque élastique (43).

3. Equipement selon la revendication 2, **caractérisé en ce que** ladite plaque élastique (43) comporte un bourrelet (51) sur sa bordure périphérique extérieure et **en ce que** ladite plaque rapportée (45) comporte un logement (52) pour l'accueil dudit bourrelet (51) et le blocage de ladite plaque élastique (43).

4. Equipement selon l'une quelconque des revendications 1 à 3, **caractérisé en ce que** la plaque (38) et la structure rapportée (45) sont réalisées en matériaux métalliques soudables et **en ce qu'**elles sont solidarisées entre elles par soudure.

5. Equipement selon l'une quelconque des revendications 1 à 4, **caractérisé en ce que** le joint d'orifice (43) de la plaque (38) est en forme de plaque de silicone.

6. Equipement selon l'une quelconque des revendications 1 à 5, **caractérisé en ce que** le moyen d'étanchement entre l'embase (37) et la paroi (3) est constitué d'un joint (48) fixé contre la face d'appui (39) de ladite embase (37).

7. Equipement selon l'une quelconque des revendications 1 à 6, **caractérisé en ce que** la plaque d'embase est réalisée en matériau métallique et est munie d'un pli à l'équerre (12), au niveau de sa bordure externe (10), qui s'étend de l'autre côté de sa face d'appui.

8. Equipement selon l'une quelconque des revendications 1 à 7, **caractérisé en ce que** la face d'appui de l'embase est équipée de moyens servant de repères pour son centrage sur l'orifice (2) ménagé dans la paroi (3).

9. Equipement selon l'une quelconque des revendications 1 à 8, **caractérisé en ce que** l'embase (37) comprend des orifices (49) pour sa fixation par vis contre la face d'appui de la paroi d'accueil (3).

## Patentansprüche

1. Vorrichtung zum Schließen des umlaufenden äußeren Rands einer in einer Wand (3) geformten, das Hindurchführen einer Rauchabzugsleitung (4) ermöglichenden Öffnung (2), wobei die Vorrichtung eine ebene Basis (37) mit einer Vorderseite (39) und einer Rückseite (40) aufweist, wobei die Basis (37) einen äußeren Rand aufweist, der durch eine äußere Umrandung (41) gebildet ist und eine innere Öffnung (42, 46) aufweist, die durch eine innere, einem Dichtring (43) zugeordnete Umrandung aufweist, wobei die Basis (37) dazu ausgelegt ist, um die besagte Leitung (4) herum mit ihrer Vorderseite (39) oder ihrer Rückseite (40) zu einer der Abstützseiten (3') der Wand (3) hin angeordnet zu werden, wobei der Dichtring (43) an der Außenwandung der Leitung (4) anliegt, und wobei die äußere Umrandung (41) der besagten Basis (37) dazu ausgelegt ist, sich über die Ausdehnung der Öffnung (2) in der Wand hinaus zu erstrecken, wobei außerdem ein Abdichtmittel (48) zwischen der Basis (37) und der Abstützseite (3') der Wand (3) vorgesehen ist, wobei die besagte Basis (37) eine feste einstückige Platte (38) aufweist, in der die innere Öffnung (42) ausgebildet ist, und wobei der Dichtring der Platte (38) die Form einer ebenen Platte (43) aus einem elastischen Material hat und ein Loch (44) aufweist, dessen Abmessungen kleiner sind als die der in der besagten Platte (38) ausgebildeten inneren Öffnung (42), wobei die eine Dichtung bildende elastische Platte (43) auf einer der Seiten der Platte (38) befestigt ist und deren Öffnung (44) auf jene (42) der besagten Platte (38) zentriert oder in etwa zentriert ist, **dadurch gekennzeichnet, daß** die Mittel zum Befestigen der elastischen Platte (43) auf einer der Seiten der Platte (38) aus einer hinzugefügten Struktur (45) bestehen, von der ein Teil auf der besagten Platte (38) befestigt ist und von der ein anderer Teil ein Gebiet der elastischen Platte (43) gegen eine der Seiten der besagten Platte (38) drückt, um deren Befestigung durch Einklemmen sicherzustellen.

2. Vorrichtung gemäß Anspruch 1, **dadurch gekennzeichnet, daß** die hinzugefügte Struktur (45) aus einer Materialplatte besteht, die eine zentrale Öffnung (46) aufweist, wobei die umlaufende äußere Umrandung der hinzugefügten Platte (45), die über die elastische Platte (43) hinausgeht, direkt auf der besagten Platte (38) befestigt ist und deren die zentrale Öffnung (46) umrandender Teil als Einklemmzone für die elastische Platte (43) dient.

3. Vorrichtung gemäß Anspruch 2, **dadurch gekennzeichnet, daß** die elastische Platte (43) an deren äußerer umlaufenden Umrandung eine Wulst (51) aufweist und daß die hinzugefügte Struktur (45) eine Aufnahme (52) zum Aufnehmen der Wulst (51) und zum Blockieren der elastischen Platte (43) aufweist.

4. Vorrichtung gemäß einem der Ansprüche 1 bis 3, **dadurch gekennzeichnet, daß** die Platte (38) und die hinzugefügte Struktur (45) aus schweißbaren metallischen Materialien gefertigt sind und daß sie miteinander verschweißt sind.

5. Vorrichtung gemäß einem der Ansprüche 1 bis 4, **dadurch gekennzeichnet, daß** die Lochdichtung (43) der Platte (38) in Form einer Silikonplatte vorliegt.

6. Vorrichtung gemäß einem der Ansprüche 1 bis 5, **dadurch gekennzeichnet, daß** die Abdichtmittel zwischen der Basis (37) und der Wand (3) aus einer Dichtung (48) bestehen, die an der Abstützseite (39) der besagten Basis (37) befestigt ist.

7. Vorrichtung gemäß einem der Ansprüche 1 bis 6, **dadurch gekennzeichnet, daß** die Basisplatte aus einem metallischen Material gefertigt ist und an ihrem äußeren Rand (10) eine rechtwinklige Falte (12) aufweist, die sich auf der anderen Seite der Abstützseite erstreckt.

8. Vorrichtung gemäß einem der Ansprüche 1 bis 7, **dadurch gekennzeichnet, daß** die Abstützseite der Basis mit Mitteln ausgestattet ist, die als Markierung für deren Zentrieren auf der in der Wand (3) ausgebildeten Öffnung (2) dient.

9. Vorrichtung gemäß einem der Ansprüche 1 bis 8, **dadurch gekennzeichnet, daß** die Basis (37) Öffnungen (49) für deren Befestigung durch Schrauben auf der Abstützfläche der aufnehmenden Wand (3) aufweist.

## Claims

1. Device for filling in the perimeter of an opening (2) made in a wall (3) to allow the passing of a conduit (4) for evacuation of smoke, said device comprising a flat base (37) having a front face (39) and a rear face (40), said base (37) having a periphery limited by an external rim (41) and being provided with an internal opening (42, 46) which is limited by an internal rim associated to a gasket (43), said base (37) being constructed for being put around said conduit (4) with one among its front face and rear face (39, 40) facing one of the bearing surfaces (3') of the wall (3), said gasket (43) being supported by the external wall of the conduit (4), and the external rim (41) of said base (37) being conceived for extending beyond the space of said opening (2) of the wall, a sealing means (48) being further provided between said base (37) and said bearing surface (3') of said wall (3), said base (37) comprising a rigid one-piece plate (38) in which said internal opening (42) is formed, and said gasket of said plate (38) being shaped as a flat plate (43) of an elastic material provided with an opening (44) having dimensions which are smaller than the ones of the internal opening (42) formed in said plate (38), said elastic plate (43) constituting a gasket being fixed on one of the faces of said plate (38) and its opening (44) being centered or approximately centered with the one (42) of said plate (38), **characterised in that** the means for fixing the elastic plate (43) on one of the faces of the plate (38) consists of an added structure (45) one part of which is fixed on said plate (38) and another part of which presses the elastic plate (43) against one of the faces of said plate (38) for obtaining its fixing by clamping.

2. Device according to claim 1, **characterised in that** said added structure (45) consists of a material plate provided with a central opening (46), the external peripheral rim of said added plate (45) which extends beyond the elastic plate (43) being fixed directly on said plate (38) and its part surrounding the central opening (46) serving as a clamping zone for said elastic plate (43).

3. Device according to claim 2, **characterised in that** said elastic plate (43) comprises a material accumulation (51) on its external peripheral rim and **in that** said added plate (45) comprises a housing (52) for lodging said material accumulation (51) and for blocking said elastic plate (43).

4. Device according to one of claims 1 to 3, **characterised in that** the plate (38) and the added structure (45) are made of weldable metallic material and **in that** they are attached to another by welding.

5. Device according to one of claims 1 to 4, **characterised in that** the gasket (43) of the opening of the plate (38) is made as a silicon plate.

6. Device according to one of claims 1 to 5, **characterised in that** the sealing means between the base (37) and the wall (3) is formed by a gasket (48) fixed to the bearing face (39) of said base (37).

7. Device according to one of claims 1 to 6, **characterised in that** the base plate is made of a metallic material and is provided at its outer edge (10) with a right angle fold (12) which extends on the other side of its bearing face.

8. Device according to one of claims 1 to 7, **characterised in that** the bearing face of the base is provided with means serving as markers for centering with the opening (2) formed in the wall (3).

9. Device according to one of claims 1 to 8, **characterised in that** the base (37) comprises openings (49) for fixing it with screws on the bearing face of the receiving wall (3).
